# EUROPEAN PATENT SPECIFICATION

(11) **EP 4 245 595 B1**
(45) Date of publication and mention of the grant of the patent: **20.05.2026**
(21) Application number: 23161416.5
(22) Date of filing: 13.03.2023
(51) Int. Cl.: B60L 50/60, B60L 53/80

(54) **SYSTEM AND METHOD FOR DISASSEMBLING/ASSEMBLING AN ELECTRIC ACCUMULATOR UNIT FROM/INTO AN ELECTRIC VEHICLE**
SYSTEM UND VERFAHREN ZUR DEMONTAGE/MONTAGE EINER ELEKTRISCHEN AKKUMULATOREINHEIT AUS/IN EIN ELEKTROFAHRZEUG
SYSTÈME ET PROCÉDÉ DE DÉMONTAGE/ASSEMBLAGE D'UNE UNITÉ D'ACCUMULATEUR ÉLECTRIQUE DEPUIS/À L'INTÉRIEUR D'UN VÉHICULE ÉLECTRIQUE

(30) Priority: 14.03.2022 IT 202200004901
(43) Date of publication of application: 20.09.2023
(73) Proprietor: Texa S.p.A., 31050 Monastier di Treviso (TV) (IT)
(72) Inventor: VIANELLO, Bruno, 31050 Monastier di Treviso (TV) (IT)
(74) Representative: Studio Torta S.p.A.

(56) References cited:
- EP-A1- 3 683 108
- CN-A- 107 107 880
- IT-A1- 201900 005 092
- US-A1- 2011 251 935
- US-A1- 2015 307 068

## Description

### CROSS-REFERENCE TO RELATED APPLICATIONS

This patent application claims priority from Italian patent application no. 102022000004901 filed on March 14, 2022.

### TECHNICAL FIELD

The present invention relates to a system and a method for disassembling/assembling an electric accumulator unit from/into an electric vehicle. The present invention is advantageously used for an electric vehicle preferably corresponding to an electric car, to which the following specification will make explicit reference without thereby losing generality.

### PRIOR ART

As is well known, electric cars are equipped with a series of electric motors to drive the wheels, and with an electric accumulator unit to supply the electric motors with the electrical energy they need to operate. In particular, the electric accumulator unit generally comprises an outer casing which is mechanically connected to the motor vehicle and supports the electric batteries (battery pack).

When the electric accumulator unit needs to be replaced and/or subjected to maintenance of the electric batteries, it is necessary to disassemble and assemble the same from/into the electric vehicle.

These operations are particularly complex to perform and exhibit technical issues. In the present case, some technical issues depend, on the one hand, on the significant weight and overall dimensions of the electric accumulator unit, and on the other, on the position in which disassembling and assembling are usually carried out, i.e., below the floor of the electric vehicle.

The above technical issues are causing a number of technical problems, some of which have been identified and addressed by the Applicant and involve, on the one hand, an increase in the time for replacement and maintenance of the electric accumulator unit and hence in the related costs, and on the other hand, exposure of the electric accumulator unit and the electric vehicle to risks of impact and damage, especially when inserting and removing the electric accumulator unit into/from the electric vehicle.

Solutions described in US 2015/307068 A1, EP 3 683 108 A1 and US 2011/251935 A1 are also known.

### DESCRIPTION OF THE INVENTION

The object of the present invention is to provide a system which is at least capable of solving the technical problems mentioned above and allows additional technical advantages, described in detail in the following description, to be obtained.

In accordance with the above object, according to the present invention, there is provided a system and method for disassembling/assembling an electric accumulator unit from/into an electric vehicle, as defined in accordance with the related claims.

The claims describe preferred embodiments of the present invention and form an integral part of the present specification.

### BRIEF DESCRIPTION OF THE DRAWINGS

The present invention will now be described with reference to the accompanying drawings, which illustrate a non-limiting embodiment thereof, wherein:
- Figure 1 is a perspective view of a system for disassembling/assembling an electric accumulator unit from/into an electric vehicle, manufactured according to the teachings of the present invention,
- Figures 2 to 8 are perspective views of the system for disassembling/assembling an electric accumulator unit from/into an electric vehicle in as many operating steps,
- Figure 9 is an enlarged-scale perspective view of a platform of a truck on which electronic detector devices of the system shown in the preceding Figures are arranged,
- Figure 10A is an enlarged-scale perspective view of an electronic detector device of the system shown in the preceding Figures,
- Figure 10B is a vertical section of the electronic detector device of the system shown in Figure 10A,
- Figures 11A and 11B schematically show two embodiments of the electronic detector device of the system which is the object of the present invention.

### PREFERRED EMBODIMENTS OF THE INVENTION

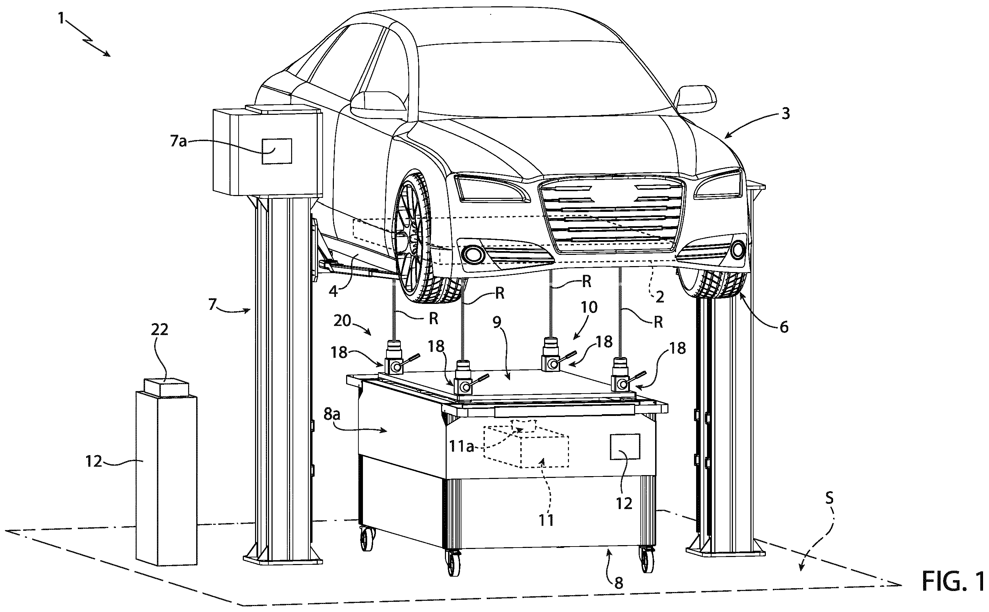

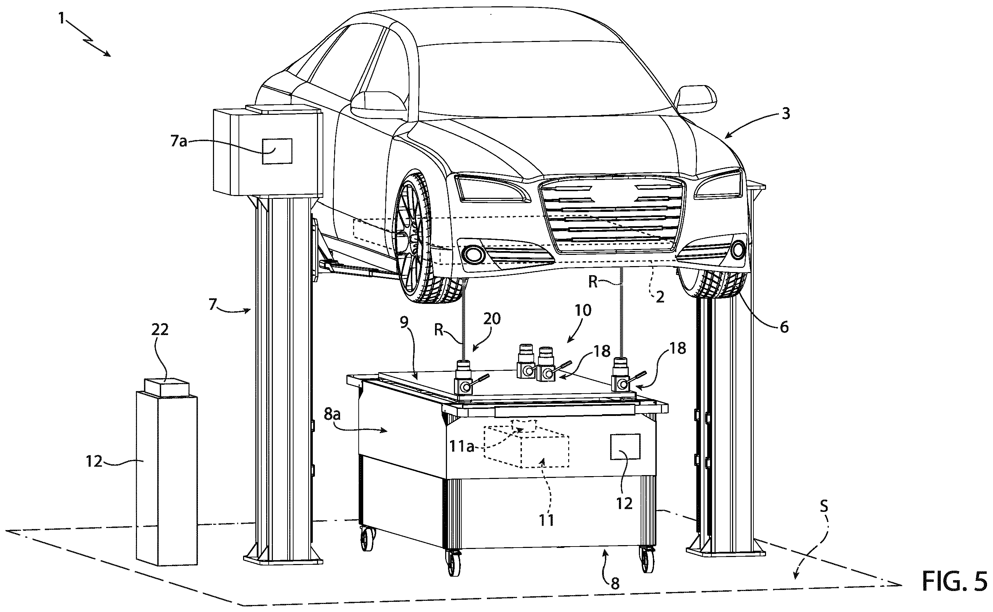

With reference to Figures 1 to 7, number 1 indicates, as a whole, a disassembly/assembly system configured and structured to disassemble/assemble an electric accumulator unit 2 from/into an electric vehicle 3.

The electric vehicle 3 may preferably be an electric car or any similar electric vehicle. For example, the electric vehicle 3 may be selected from any of the following types: BEV ("Battery Electric vehicle"), or FHEV ("Full Hybrid Electric vehicle"), PHEV ("Plug-in Hybrid Electric vehicle") or E-REV ("Extended-Range Electric vehicle").

With reference to Figures 1 to 7, the electric vehicle 3 may comprise a body 4, a floor 5 (underbody), a plurality of wheels 6 (preferably four) driven into rotation by one or more electric motors (not shown).

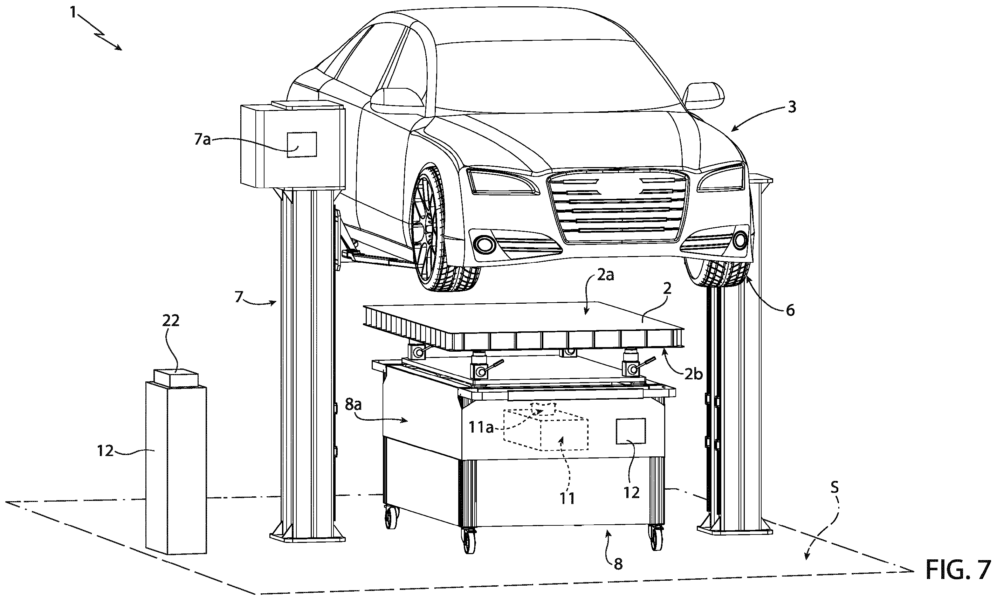

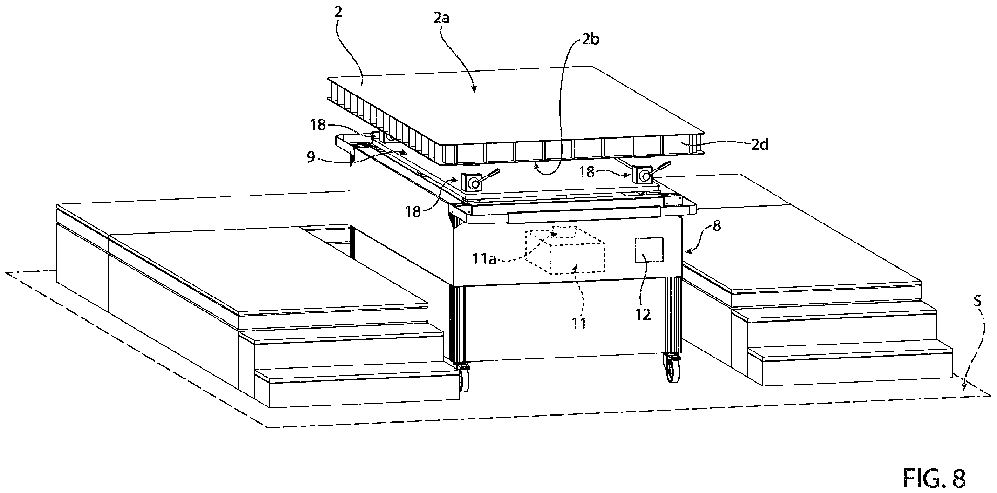

The electric accumulator unit 2 comprises an outer casing or support structure 2a and electric batteries 2d (electric accumulators) supported by the support structure 2a to form a battery pack. The support structure 2a is coupled stably, but in an easily removable (separable, decouplable) way, to the electric vehicle 3. The support structure 2a can be mechanically connected to the body 4 and/or floor 5 of the electric vehicle 3 in a known way, for example by means of mechanical connection elements, i.e., screws, nuts, or the like (not shown). The electric accumulator unit 2 can have an approximately parallelepiped box shape (Figures 7 and 8), and is structured/sized to be arranged in a lower compartment (not shown) of the electric vehicle 3 which is accessible through the floor 5.

With reference to Figure 1, the disassembly/assembly system comprises a car-lift 7, which rests on a service surface S and is designed to move the electric vehicle 3 to and from the service surface S in order to arrange the electric vehicle 3 in a lifted position relative to the underlying service surface S, at a predetermined operating height. In the embodiment shown in the attached Figures, the car-lift 7 comprises vertical columns along which slides are moved on command, from which arms structured to support the electric vehicle 3 during vertical movement extend cantilevered.

The system 1 further comprises a truck 8 which is structured to support and transport the electric accumulator unit 2. The truck 8 is mobile (movable) and is structured so that it can be moved horizontally on the service surface S in an operating position below the electric vehicle 3 when the electric vehicle 3 is in the lifted position (Figures 1-7). The truck 8 comprises a platform 9 which, in the preferred embodiment shown in the attached Figures, is vertically movable for the extraction and insertion of the electric accumulator unit 2 from/into the electric vehicle 3 as described below in detail.

The system 1 further comprises an electronic detector system 10, which is configured to detect a first condition, which is indicative of a predetermined positioning of the platform 9 with respect to the electric accumulator unit 2 (mounted in the vehicle) and/or of the platform 9 with respect to the lifted electric vehicle 3, and provides control signals based on the first detected condition.

According to a preferred embodiment shown in the attached Figures, during disassembly, the first condition is satisfied when the platform 9 and the electric accumulator unit 2 mounted in the electric vehicle 3 are in a reciprocal abutment state, i.e., in contact with each other.

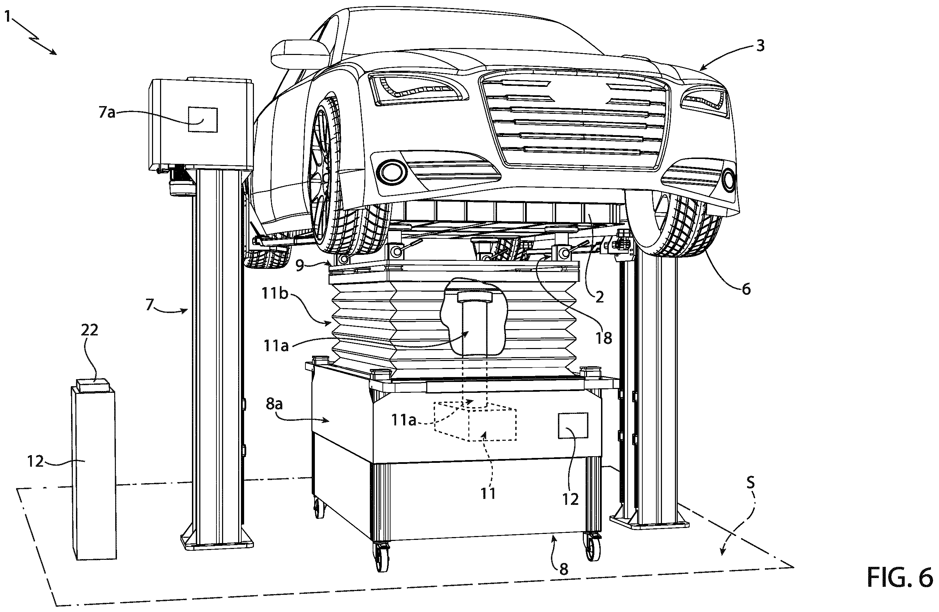

According to a preferred embodiment shown in the attached Figures, the truck 8 comprises a moving device 11, which is structured to move the platform 9 vertically. The moving device 11 is structured to move the platform 9 vertically between a rest position (shown in Figure 1), in which the platform 9 is lowered, and a working position (Figure 6), in which the platform 9 is lifted with respect to the underlying rest position.

The system 1 also comprises an electronic control unit 12, which is configured to receive control signals from the electronic detector system 10 and drives (controls) the moving device 11 in order to control (regulate) the vertical movement of the platform 9 toward the electric vehicle 3 (in the lifted position) based on the control signals.

According to a preferred embodiment, the electronic control unit 12 is configured so that it controls the moving device 11 in order to control the vertical lifting of the platform 9 and to stop said lifting when the control signals indicate the detection of the reciprocal abutment state of the platform 9 and the electric accumulator unit 2 mounted in the electric vehicle 3 (during disassembly), or the reciprocal abutment state of the electric accumulator unit 2 and an inner wall of the compartment of the vehicle 3 (during assembly).

According to this preferred embodiment, the first condition occurs when the electronic control unit 12 detects the reciprocal abutment state of the platform 9 and the electric accumulator unit 2 mounted in the electric vehicle 3 (during disassembly) or the reciprocal abutment state of the electric accumulator unit 2 and a part of the vehicle 3, for example the inner compartment (during assembly). According to this preferred embodiment, during disassembly, the working position corresponds to the lifted position reached by the platform 9 when the first condition is detected and in which the lifting is stopped.

The Applicant found that the system described above has the technical effect of reducing the time and cost of extraction and insertion of the electric accumulator unit from/into the electric vehicle 3 and of reducing the risk of damage to both the electric accumulator unit 2 and the vehicle 3 itself.

According to a preferred exemplary embodiment shown in the attached Figures, the truck 8 can comprise a structure or frame 8a, and a bottom base on which swivel wheels are preferably arranged resting on the service surface S. The truck 8 can be structured so that its movement can be manual, and/or semi-automatic (with a user-operated drive unit), and/or automatic (with a fully independent drive unit). The platform 9 is shaped so that it has a flat, horizontal top surface. The platform 9, for example, can be a flat, quadrangular (rectangular) horizontal slab.

According to a possible exemplary embodiment shown in Figure 6, the moving device 11 can be at least partially arranged inside the frame 8a. The moving device 11 is structured to support the platform 9. In the rest position, the platform 9 is supported by the moving device 11 directly above the frame 8a.

The moving device 11 may include, for example, a lift 11a designed to move the platform 9 vertically. The lift 11a may be an electro-mechanical, electro-pneumatic or electro-hydraulic lifting device, or the like. For example, the lifting device 11a may include one or more of the hydraulic pistons (Figure 6) and/or an articulated parallelogram lift, and/or electric actuators, or any similar lifting member.

Conveniently, the moving device 11 can comprise an external bellows protection 11b extending between the platform 9 and the frame 8 to surround the internal lifting device 11a in order to increase safety for the operator. For example, the external bellows protection 11b can be shaped to expand and shrink vertically when the platform 9 is in the working and rest positions, respectively.

According to a preferred embodiment shown in the attached Figures, the electronic detector system 10 may comprise a plurality of electronic detector devices 18 associated with the platform 9. In a preferred embodiment, the electronic detector devices 18 are designed to be coupled stably, but in an easily removable (separable) way, to/from the platform 9. The electronic detector devices 18 can be arranged, in use, resting on the top surface of the platform 9, in respective predetermined parts (surface areas or portions) of the platform 9.

Each electronic detector device 18 is structured to be freely moved and positioned manually on the top surface of the platform 9. In the working position of the platform 9, the electronic detector devices 18 are interposed between the platform 9 and the electric accumulator unit 2 in such a way that they are in contact with the electric accumulator unit 2 (Figure 6). The electronic detector devices 18 are configured to each provide control signals indicative of the reciprocal abutment state of the platform 9 and the electric accumulator unit 2. In this embodiment, during disassembly, the electronic control unit 12 determines the first condition when the control signals from the electronic detector devices 18 indicate that the electronic detector devices 18 are resting against the electric accumulator unit 2 (Figure 6).

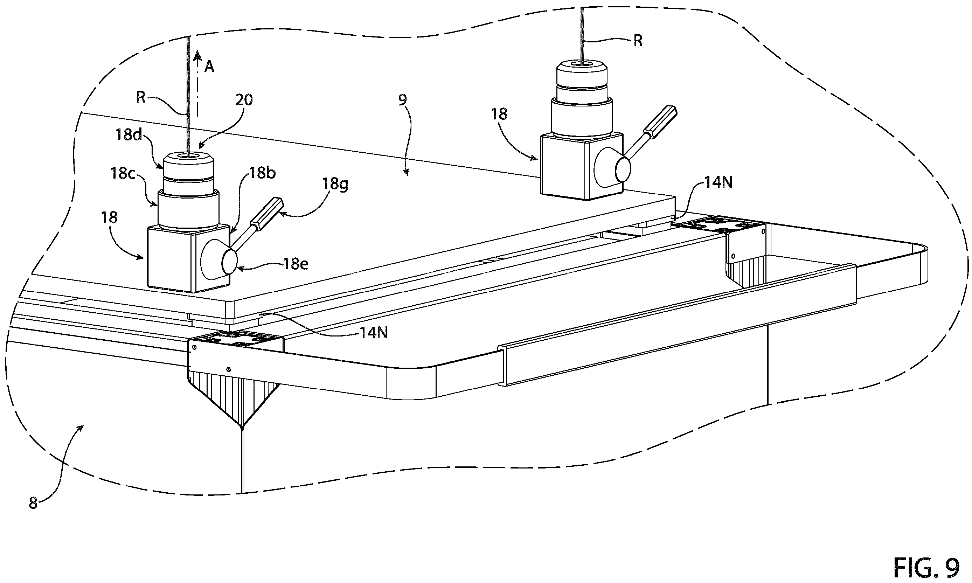

According to a preferred embodiment shown in Figures 9, 10A, 10B, 11A and 11B, the electronic detector devices 18 may each include force-sensing electronic modules 18a. The force-sensing electronic modules 18a can be arranged (housed) in the electronic detector devices 18 in such a way that they are compressed between the electric accumulator unit 2 mounted in the vehicle 3 and the platform 9 in its terminal section of the lifting, i.e., when the platform 9 approximately reaches the working position. The force-sensing electronic modules 18a may conveniently comprise electronic load cells or any transducer suitable for use in determining a force to which the electronic detector devices 18 are subject in order to provide control signals indicative of the measured force. For example, transducers such as strain gauges or the like and electronic circuits providing control signals based on strain gauge deformation can be used.

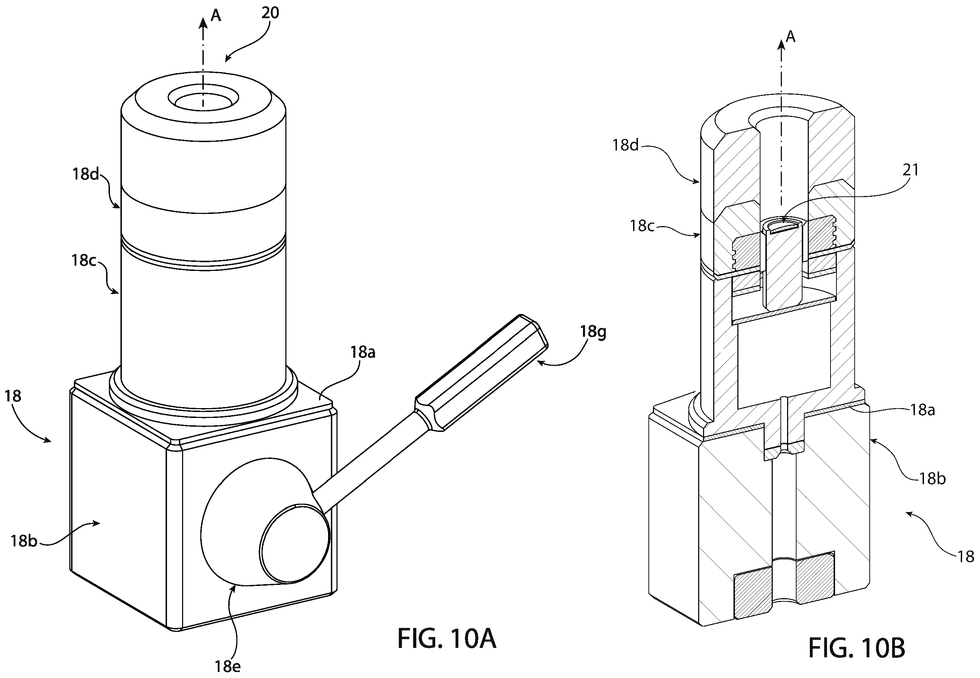

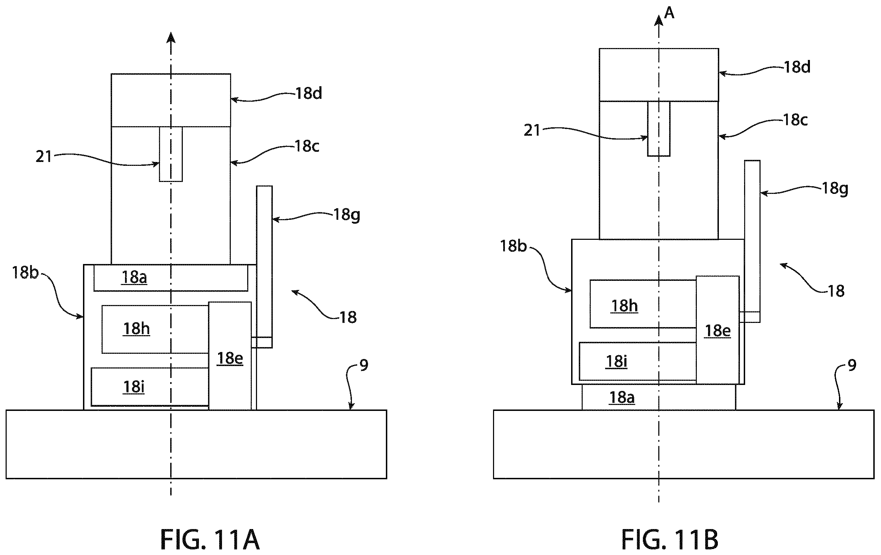

According to a possible embodiment shown in Figures 9, 10A, 10B, 11A, 11B, the electronic detector device 18 may comprise an (external) structure or container 18b provided with a bottom (flat) base which, in use, rests on the platform 9, an upper rod or stem 18c, which extends vertically cantilevered from the enclosure 18b on the opposite side with respect to the underlying base, so as to extend along an axis A, and has at its end a head 18d which, in use, is arranged in abutment against (in contact with) the bottom face 2b of the electric accumulator unit 2. Conveniently, the stem 18c can be mechanically connected to the force-sensing electronic module 18a to transmit thereto the contact/compression force exerted by the bottom surface 2b of the electric accumulator unit 2 on the head 18d (Figure 10B, 11A).

It should be understood that the force-sensing electronic module 18a can be arranged in any position in the electronic detector device 18. For example, as shown in Figure 11B, the force-sensing electronic module 18a can be arranged on the base of the electronic detector device 18.

According to a preferred embodiment, the stem 18c can be mechanically coupled to the container 18b so that it can be moved axially along the axis A to adjust (vary) the height of the head 18d relative to the bottom resting base of the container 18b. Conveniently, a pad made of elastic material, such as for example rubber or the like, can be fitted on the head 18d in an easily removable (separable) manner.

The technical effect obtained by interposing the electronic detector devices 18 between the platform 9 and the electric accumulator unit 2 is to maintain, in the working position, a free space below the electric accumulator unit 2 which is useful for allowing operators to decouple the mechanical connection elements of the electric accumulator unit 2 from the floor 5 or from the body 4, and at the same time, for supporting the electric accumulator unit 2 even after the completion of its mechanical decoupling from the electric vehicle 3. In addition, the technical effect of the height-adjustable heads 18d is to compensate for any differences in height between the contact points of the bottom surface 2b of the electric accumulator unit 2 that are to be supported by the electronic detector devices 18.

According to one embodiment, the electronic detector device 18 comprises a coupling member 18e, which is suitable for coupling the electronic detector device 18 to the platform 9 in a stable but easily removable (separable) manner. The coupling member 18e can be structured to couple the electronic detector device 18 to the platform 9 magnetically. Preferably, the coupling member 18e may conveniently comprise an electro-magnetic device which can be operated by a command from the operator, for example through a control member 18g (a lever or a push button). The platform 9 can be made of ferromagnetic material.

According to a possible embodiment, the electronic detector system 18 may comprise an electronic centring system 20. The electronic centring system 20 can be configured to emit light signals R from the platform 9 to the bottom surface of the electric accumulator unit 2 mounted in the electric vehicle 3.

According to a possible embodiment shown in Figures 1-7, the light signals R may include laser beams or collimated light signals.

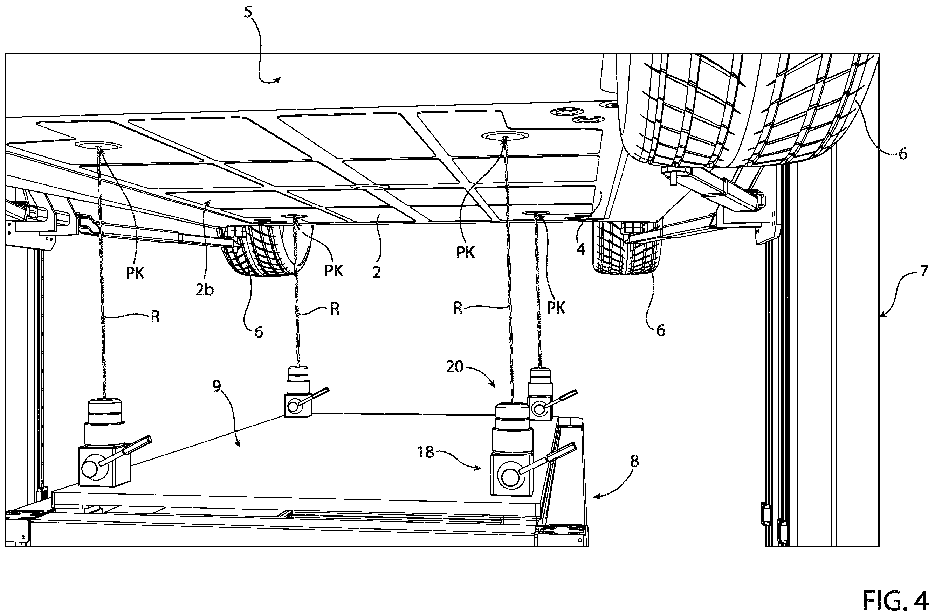

Conveniently, the laser beam may have a wavelength within the visible spectrum so that the operator can observe on the bottom surface of the electric accumulator unit 2 (Figure 4) the deviation of the points of incidence of the laser beams on the face 2b from the predetermined centring points PK on the same, which are suitable for the support of the electric accumulator unit 2. In this way, the operator is conveniently guided in centring/aligning the platform 9 and/or the electronic detector devices 18 with respect to the predetermined centring points PK of the electric accumulator unit 2 (Figure 4).

According to a possible embodiment shown in Figures 10B, 11A, 11B, the light signals R are emitted by light sources 21 arranged in the electronic detector devices 18. Preferably, the light sources 21 may include LEDs and are arranged on the head 18d of the electronic detector device 18 and emit light signals R in approximately vertical directions towards the electric accumulator unit 2. Preferably, the electronic detector device 18 may be equipped with an electronic processing module 18h (Figures 11A and 11B), which is electrically connected to the light source 21 and is configured to provide a measurement signal indicative of the distance of the head 18d and/or the platform 9 from the electric accumulator unit 2 (e.g., the surface 2b) based on the light signal R emitted by the light source 21. The electronic processing module 18h may be equipped with an electronic photo-receiver module (not shown) and be configured to determine a value indicative of this distance, for example, based on the time of flight of the LASER beam pulses.

According to one embodiment, the electronic centring system 20 may include, as an alternative to or in addition to the light sources 21, cameras or video cameras (not shown) arranged in the electronic detector devices 18 and oriented towards the electric accumulator unit 2, in particular its surface 2b, to provide signals/data containing the captured images. In this embodiment, the electronic processing module 18h can process the images captured by the video cameras to provide the operator with data to centre the platform 9 in relation to the electric accumulator unit 2.

According to a preferred embodiment shown in Figures 11A, 11B, the electronic detector device 18 may be provided with a communication module 18i through which the electronic processing module 18h communicates/exchanges signal data, for example control signals, to/with the electronic control unit 12. Preferably, the communication module 18i can be wireless.

The electronic control unit 12 can comprise a processing device installed in the truck 8 and/or be a computer device of the operator, for example a personal computer, laptop, tablet, smart-phone, or any similar electronic device.

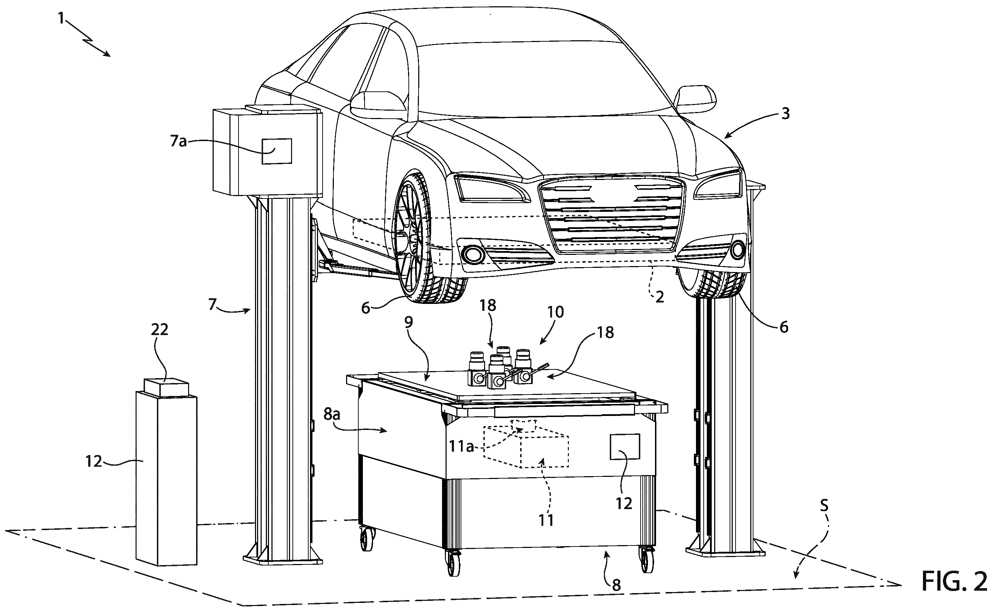

With reference to Figures 1 to 7, the method according to the present invention will be described hereinafter, including a step of disassembling the electric accumulator unit 2 from the electric vehicle 3 wherein it is assumed that: the electric vehicle 3 is arranged on the car-lift 7 in the lifted position, the platform 9 of the truck 8 is in the rest position, and the electronic detector system 10 comprises a number of electronic detector devices 18, for example four (Figure 2).

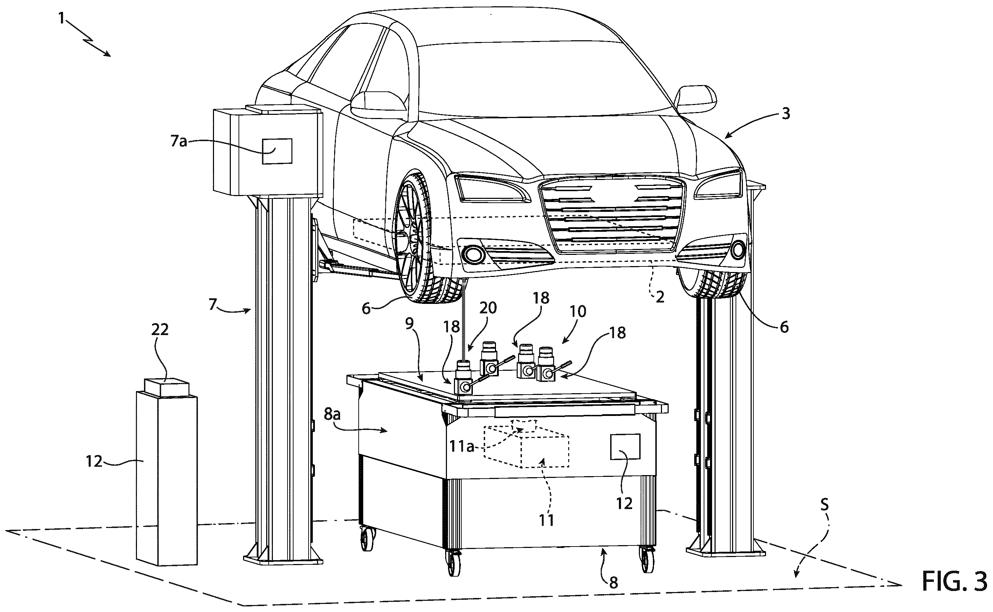

The operator arranges the truck 8 below the electric vehicle 3. The operator positions the electronic detector devices 18 in the respective predetermined positions on the top surface of the platform 9, e.g., at approximately the corners of the platform 9 (Figure 3). In this step, the operator may conveniently determine the predetermined position of the electronic detector device 18 on the platform 9 by activating the light source 21 of the electronic detector device 18. Preferably, the operator can determine the correct predetermined position of the electronic detector device 18 on the platform 9 and then perform the centring operation via the centring system 20. Centring is achieved when the light signal R of the electronic detector device 18 hits the respective centring point PK on the bottom surface 2b of the electric accumulator unit 2 mounted in the electric vehicle 3 (Figure 3).

The operator may conveniently stably lock the electronic detector device 18 in the predetermined position on the platform 9 by actuating the coupling member 18e.

It should be understood that the operations described above are also carried out in a similar way for the remaining electronic detector devices 18.

Once the electronic detector devices 18 are stably arranged in the respective predetermined positions, the operator may check, for example, whether the distances between the electronic detector devices 18 and the respective centring points PK satisfy a given support condition. For example, the operator may check whether the distances between the heads 18d and the respective centring points PK on the bottom surface 2a of the electric accumulator unit 2 are greater than a certain distance and/or equal to each other. Preferably, in this step, the electronic detector device 18 measures the distance based on the light signal R and communicates the measured distance to the electronic control unit 12. The electronic control unit 12 may include a user interface 22 provided with a display or monitor to inform the operator of the measured distances. The operator may selectively adjust the height of the heads 18d of the electronic detector devices 18 on the basis of the measured distances. It should be understood that the electronic detector device 18 may include an electro-actuator mechanism (not shown) to automatically control the height of the head 18d based on a command generated by the electronic control unit 12. The command can be generated on the basis of the deviation of the distance measured by the electronic detector device 18 from a predetermined distance.

The operator can activate the lifting of the platform 9 of the truck 8 by means of the electronic control unit 12 in order to start the extraction of the electric accumulator unit 2. Activation may be performed, for example, by means of a manual command given by the operator via a control panel of the user interface 22.

In response to the activation command, the electronic control unit 12 commands, via the moving device 11, the lifting of the platform 9 from the rest position towards the electric accumulator unit 2. The electronic detector devices 18 mounted on the platform 9 communicate the control signals to the electronic control unit 12. The electronic control unit 12 determines the first condition on the basis of the control signals. According to the embodiment shown in the attached Figures, the electronic control unit 12 determines the first condition when the force measured by the force-sensing electronic modules, encoded in the control signals, satisfies a certain condition with respect to a force threshold indicative of a force of contact between the platform 9 and the electric accumulator unit 2. In the first condition, the platform 9 and the electric accumulator unit 2 are in contact with each other. When the first condition is determined, the electronic control unit 12 stops the movement of the platform 9 into the working position. At this point, the electric accumulator unit 2 is in contact with the platform 9 via the electronic detector devices 18, and the operator can mechanically release/decouple the electric accumulator unit 2 from the body 4 or the floor 5 of the electric vehicle 3. At this stage, the electric accumulator unit 2 is free of its connection constraints to the electric vehicle 3 and can be extracted.

The operator commands the electronic control unit 12 via the user interface to lower the platform 9. In response to the user command, the electronic control unit 12 commands via the moving device 11 the lowering of the platform 9 from the working position to the rest position. At this point, the electric accumulator unit 2 can be conveniently transported by the truck 8 from the operating position to a maintenance station (Figure 8).

The method of assembling the electric accumulator unit 2 in the electric vehicle 3 comprises at least the following steps. Transporting the truck 8 with the platform 9 that supports the electric accumulator unit 2 (new or reconditioned) to the operating station below the electric vehicle 3 in the lifted position (Figure 7), lifting the platform 9 supporting the electric accumulator unit 2 from the rest position to the working position (Figure 6). The working position can be determined on the basis of the position reached and stored during the preceding disassembly step, for example on the basis of the stored height of the platform 9 during disassembly in the working position, and/or on the basis of the control signals provided by the electronic detector devices 18. For example, the control signals may be indicative of the achievement of a force threshold indicative of the compression exerted on the heads 18d when the electric accumulator unit 2 is inserted into the compartment of the electric vehicle 3 in the correct position, abutting against the inner wall of the compartment.

The system and method described above simplify the actions to be taken by the operator to disassemble and assemble the electric accumulator unit from/into the vehicle and allow for a reduction in maintenance time, maintenance costs, and risk of damage.

Lastly, it is clear that modifications and variations may be made to the above-described system and method without however departing from the scope of the present invention.

According to an embodiment shown in Figure 9, the system substantially corresponds to the system 1 described above and differs from the same in that it comprises one or more force-sensing electronic modules 14N interposed between the platform 9 and the moving device 11. In this embodiment, the force-sensing electronic module(s) 14N can be used as an alternative and/or in addition to the force-sensing electronic modules 18a. In this embodiment, the force-sensing electronic modules 14N can provide control signals to the electronic control unit 2. In this embodiment, the electronic detector system 10 may be devoid of the electronic detector devices 18 and only comprise the force-sensing electronic modules 14N to determine the working position of the platform 9.

According to one embodiment (not shown), the system differs from the system 1 described above in that, during disassembly, the truck 8 keeps the platform 9 in the rest position and that the electronic control unit 12 commands the movement of the electric vehicle 3 towards the underlying platform 9 via an electronic control system 7a controlling the car-lift 7. Said movement can be controlled by the electronic control system 7a controlling the car-lift 7 on the basis of the control signals provided by the electronic detector system 10 of the truck 8. In this embodiment, the downward movement of the electric vehicle 3 via the car-lift 7 is stopped when the control signals indicate that the electric accumulator unit 2 abuts against the electrical detector devices 10 on the platform 9. In this condition, the operator may then decouple the electric accumulator unit 2 from the floor 5 or the body 4. Following decoupling, the operator may command the lifting of the electric vehicle 3 via the car-lift 7 so as to distance it from the electric accumulator unit 2 which remains loaded on the platform 9. The operator can then move the truck 8 supporting the electric accumulator unit 2 from the operating station to the maintenance station (Figure 8). It should be understood that in this embodiment the assembly of the electric accumulator unit 2 into the vehicle 3 may be carried out, for example vice versa, through the same operations as above in an operating sequence opposite to that described above.

## Claims

1. A system (1) for disassembling/assembling an electric accumulator unit (2) from/into an electric vehicle (3), the system includes:
a car-lift (7), which rests on a service surface (S) and is designed to vertically move the electric vehicle (3) to and from the service surface (S) in order to arrange the electric vehicle (3) in a lifted position relative to the service surface (S),
a truck (8) which is structured to be arranged below the electric vehicle (3) when said electric vehicle (3) is in said lifted position, and comprises a platform (9) which is structured to support the electric accumulator unit (2),
an electronic detector system (10), which is configured to detect a first condition indicative of a predetermined positioning of the platform (9) of the truck (8) with respect to the electric accumulator unit (2) and/or with respect to the electric vehicle (3), and provides control signals based on said first condition,
**characterised in that**
wherein during the disassembly, said first condition is satisfied when the platform (9) of the truck (8) and the electric accumulator unit (2) mounted in the electric vehicle (3) are in a reciprocal abutment state.

2. The system according to claim 1, wherein said truck (8) comprises an electric moving device (11) structured to vertically move said platform (9),
said disassembling/assembling system further comprises an electronic control unit (12), which is configured to receive control signals from the electronic detector system (10) and controls said electric moving device (11) based on said control signals.

3. The system according to claims 1 or 2, wherein said car-lift (7) comprises an electronic control system (7a) configured to receive control signals from the electronic detector system (10) and controls the vertical movement of the electric vehicle (3) via the car-lift (7) based on said control signals.

4. The system according to any of the foregoing claims, wherein said electronic detector system (10) comprises a plurality of electronic detector devices (18), which are arranged on the platform (9) and are configured to provide said control signals based on the reciprocal abutment state of the platform (9) and the electric accumulator unit (2).

5. The system according to claim 4, wherein said electronic detector devices (18) comprise force-transducer means.

6. The system according to claims 4 or 5, wherein said electronic detector devices (18) are each provided with a coupling member (18e), which can be operated by the operator for coupling or decoupling said electronic detector device (18) on said platform (9).

7. The system according to any of the foregoing claims from 4 to 6, comprising an electronic centring system (20), which is configured to generate lighting signals for arranging said electronic detector devices (18) and/or said platform (9) with respect to said electric accumulator unit (2).

8. The system according to any of the foregoing claims from 4 to 7, wherein said electronic detector devices (18) are provided with a resting base designed to rest on said platform (9), a support head (18d) which is arranged opposite to said resting base, and an adjustment mechanism to vary the axial position of said support head (18d) relative to the base.

9. The system according to any of the foregoing claims from 4 to 8, wherein each electronic detector device (18) is structured to be freely moved and positioned manually on the top surface of the platform (9).

10. The system according to any of the foregoing claims from 4 to 9, wherein in a working position of the platform (9), the electronic detector devices (18) are interposed between the platform (9) and the electric accumulator unit (2) in such a way that they are in contact with the electric accumulator unit (2).

11. The system according to any of the foregoing claims from 4 to 10, wherein force-sensing electronic modules (18a) are arranged in the electronic detector devices (18) in such a way that they are compressed between the electric accumulator unit (2) mounted in the vehicle (3) and the platform (9) in its terminal section of the lifting, when the platform (9) approximately reaches a working position.

12. The system according to claim 11, wherein the force-sensing electronic modules (18a) comprise electronic load cells or transducer for determining a force to which the electronic detector devices (18) are subject in order to provide control signals indicative of the measured force.

13. The system according to claim 7, wherein the electronic centring system (20) is configured to emit light signals from the platform (9) to the bottom surface of the electric accumulator unit (2) mounted in the electric vehicle (3) .

14. The system according to claim 13, wherein the light signals include laser beams or collimated light signals.

15. A method for disassembling/assembling an electric accumulator unit (2) from/into an electric vehicle (3),
the method comprising the following steps:
vertically moving, by means of a car-lift (7), the electric vehicle (3) to and from a service surface (S) in order to place the electric vehicle (3) in a lifted position relative to the service surface (S),
providing a truck (8) comprising a platform (9) which is structured to support the electric accumulator unit (2),
arranging the truck (8) below the electric vehicle (3) when said electric vehicle (3) is in said lifted position,
detecting, via an electronic detector system (10), a first condition indicative of a predetermined positioning of the platform (9) of the truck (8) with respect to the electric accumulator unit (2) and/or the electric vehicle (3) and providing control signals based on said first condition,
**characterised in that**
wherein during the disassembly, said first condition is satisfied when the platform (9) of the truck (8) and the electric accumulator unit (2) mounted in the electric vehicle (3) are in a reciprocal abutment state.

## Patentansprüche

1. System (1) zur Demontage/Montage einer elektronischen Akkumulatoreinheit (2) aus einem/in ein Elektrofahrzeug (3), wobei das System Folgendes umfasst:
eine Hebebühne (7), die auf einer Serviceoberfläche (S) ruht und ausgestaltet ist, um das Elektrofahrzeug (3) vertikal auf die Serviceoberfläche (S) zu und von dieser weg zu bewegen, sodass das Elektrofahrzeug (3) in einer angehobenen Position relativ zu der Serviceoberfläche (S) angeordnet wird,
ein Wagen (8), der strukturiert ist, um unter dem Elektrofahrzeug (3) angeordnet zu werden, wenn sich das Elektrofahrzeug (3) in der angehobenen Position befindet, und der eine Plattform (9) umfasst, die strukturiert ist, um die elektrische Akkumulatoreinheit (2) zu stützen, sowie ein elektronisches Detektorsystem (10), das ausgelegt ist, um einen ersten Zustand zu detektieren, der Aufschluss über eine vorbestimmte Positionierung der Plattform (9) des Wagens (8) in Bezug auf die elektrische Akkumulatoreinheit (2) und/oder in Bezug auf das Elektrofahrzeug (3) gibt, und das auf dem ersten Zustand basierende Steuersignale bereitstellt,
**dadurch gekennzeichnet, dass**
der erste Zustand während der Demontage vorliegt, wenn sich die Plattform (9) des Wagens (8) und die in dem Elektrofahrzeug (3) montierte elektrische Akkumulatoreinheit (2) in einem gegenseitigen Anliegeverhältnis befinden.

2. System nach Anspruch 1, wobei der Wagen (8) eine elektrische Bewegungsvorrichtung (11) umfasst, die strukturiert ist, um die Plattform (9) vertikal zu bewegen, wobei das Demontage-/Montagesystem ferner eine elektronische Steuereinheit (12) umfasst, die ausgelegt ist, um Steuersignale von dem elektronischen Detektorsystem (10) zu empfangen, und die die elektronische Bewegungsvorrichtung (11) basierend auf den Steuersignalen steuert.

3. System nach Anspruch 1 oder 2, wobei die Hebebühne (7) ein elektronisches Steuersystem (7a) umfasst, das ausgelegt ist, um Steuersignale von dem elektronischen Detektorsystem (10) zu empfangen, und das die vertikale Bewegung des Elektrofahrzeugs (3) über die Hebebühne (7) basierend auf den Steuersignalen steuert.

4. System nach einem der vorhergehenden Ansprüche, wobei das elektronische Detektorsystem (10) eine Vielzahl von elektronischen Detektorvorrichtungen (18) umfasst, die auf der Plattform (9) angeordnet sind und ausgelegt sind, um die Steuersignale basierend auf dem gegenseitigen Anliegeverhältnis der Plattform (9) und der elektrischen Akkumulatoreinheit (2) bereitzustellen.

5. System nach Anspruch 4, wobei die elektronischen Detektorvorrichtungen (18) Kraftumwandlungsmittel umfassen.

6. System nach Anspruch 4 oder 5, wobei die elektronischen Detektorvorrichtungen (18) jeweils mit einem Kupplungselement (18a) versehen sind, das von dem Bediener betätigt werden kann, um die elektronische Detektorvorrichtung (18) an der Plattform (9) zu kuppeln oder von dieser zu lösen.

7. System nach einem der vorhergehenden Ansprüche 4 bis 6, umfassend ein elektronisches Zentriersystem (20), das ausgelegt ist, um Beleuchtungssignale zum Anordnen der elektronischen Detektorvorrichtungen (18) und/oder der Plattform (9) in Bezug auf die elektronische Akkumulatoreinheit (2) zu generieren.

8. System nach einem der vorhergehenden Ansprüche 4 bis 7, wobei die elektronischen Detektorvorrichtungen (18) mit einer Ruhebasis versehen sind, die ausgestaltet ist, um auf der Plattform (9) zu ruhen, mit einem Stützkopf (18d), der der Ruhebasis gegenüberliegend angeordnet ist, und einem Einstellmechanismus, um die axiale Position des Stützkopfs (18d) relativ zu der Basis zu variieren.

9. System nach einem der vorhergehenden Ansprüche 4 bis 8, wobei jeder elektronische Detektorvorrichtung (18) strukturiert ist, um frei bewegt und von Hand auf der oberseitigen Oberfläche der Plattform (9) positioniert zu werden.

10. System nach einem der vorhergehenden Ansprüche 4 bis 9, wobei die elektronischen Detektorvorrichtungen (18) in einer Arbeitsposition der Plattform (9) zwischen der Plattform (9) und der elektrischen Akkumulatoreinheit (2) derart eingesetzt sind, dass sie mit der elektrischen Akkumulatoreinheit (2) in Kontakt sind.

11. System nach einem der vorhergehenden Ansprüche 4 bis 10, wobei kraftmessende elektronische Module (18a) in den elektronischen Detektorvorrichtungen (18) derart angeordnet sind, dass sie zwischen der in dem Fahrzeug (3) montierten elektrischen Akkumulatoreinheit (2) und der Plattform (9) in deren abschließenden Abschnitt des Hebens zusammengedrückt werden, wenn die Plattform (9) annähernd eine Arbeitsposition erreicht.

12. System nach Anspruch 11, wobei die kraftmessenden elektronischen Module (18a) elektronische Kraftaufnehmer oder -wandler zum Ermitteln einer Kraft umfassen, der die elektronischen Detektorvorrichtungen (18) ausgesetzt sind, um Steuersignale bereitzustellen, die Aufschluss über die gemessene Kraft geben.

13. System nach Anspruch 7, wobei das elektronische Zentriersystem (20) ausgelegt ist, um Lichtsignale von der Plattform (9) zur unterseitigen Oberfläche der in dem Elektrofahrzeug (3) montierten elektronischen Akkumulatoreinheit (2) auszusenden.

14. System nach Anspruch 13, wobei die Lichtsignale Laserstrahlen oder kollimierte Lichtsignale beinhalten.

15. Verfahren zur Demontage/Montage einer elektronischen Akkumulatoreinheit (2) aus einem/in ein Elektrofahrzeug (3), wobei das Verfahren folgende Schritte umfasst:
vertikales Bewegen des Elektrofahrzeugs (3) mittels einer Hebebühne (7) auf eine Serviceoberfläche (S) zu und von dieser weg, um das Elektrofahrzeug (3) in einer angehobenen Position relativ zu der Serviceoberfläche (S) zu platzieren;
Bereitstellen eines Wagens (8), umfassend eine Plattform (9), die strukturiert ist, um die elektrische Akkumulatoreinheit (2) zu stützen, Anordnen des Wagens (8) unter dem Elektrofahrzeug (3), wenn sich das Elektrofahrzeug (3) in der angehobenen Position befindet;
Detektieren eines ersten Zustands, der Aufschluss über eine vorbestimmte Positionierung der Plattform (9) des Wagens (8) in Bezug auf die elektrische Akkumulatoreinheit (2) und/oder das Elektrofahrzeug (2) gibt, über ein elektronisches Detektionssystem (10), und Bereitstellen von Steuersignalen basierend auf dem ersten Zustand,
**dadurch gekennzeichnet, dass**
der erste Zustand während der Demontage vorliegt, wenn sich die Plattform (9) des Wagens (8) und die in dem Elektrofahrzeug (3) montierte elektrische Akkumulatoreinheit (2) in einem gegenseitigen Anliegeverhältnis befinden.

## Revendications

1. Système (1) pour le démontage/montage d'une unité à accumulateur électrique (2) depuis/dans un véhicule électrique (3), le système inclut :
un pont-élévateur (7), qui repose sur une surface de service (S) et est conçu pour déplacer verticalement le véhicule électrique (3) vers et depuis la surface de service (S) afin d'agencer le véhicule électrique (3) dans une position levée par rapport à la surface de service (S),
un chariot (8) qui est structuré pour être agencé sous le véhicule électrique (3) lorsque ledit véhicule électrique (3) est dans ladite position levée, et comprend une plateforme (9) qui est structurée pour porter l'unité à accumulateur électrique (2), un système à détecteurs électroniques (10), qui est configuré pour détecter une première condition indicative d'un positionnement prédéterminé de la plateforme (9) du chariot (8) par rapport à l'unité à accumulateur électrique (2) et/ou par rapport au véhicule électrique (3), et fournit des signaux de commande sur la base de ladite première condition,
**caractérisé en ce que**
dans lequel, pendant le démontage, ladite première condition est satisfaite lorsque la plateforme (9) du chariot (8) et l'unité à accumulateur électrique (2) montée dans le véhicule électrique (3) sont dans un état de butée réciproque.

2. Système selon la revendication 1, dans lequel ledit chariot (8) comprend un dispositif de déplacement électrique (11) structuré pour déplacer verticalement ladite plateforme (9), ledit système de démontage/montage comprend en outre une unité de commande électronique (12), qui est configurée pour recevoir des signaux de commande en provenance du système à détecteurs électroniques (10) et commande ledit dispositif de déplacement électrique (11) sur la base desdits signaux de commande.

3. Système selon les revendications 1 ou 2, dans lequel ledit pont-élévateur (7) comprend un système de commande électronique (7a) configuré pour recevoir des signaux de commande en provenance du système à détecteurs électroniques (10) et commande le mouvement vertical du véhicule électrique (3) par le biais du pont-élévateur (7) sur la base desdits signaux de commande.

4. Système selon l'une quelconque des revendications précédentes, dans lequel ledit système à détecteurs électroniques (10) comprend une pluralité de dispositifs à détecteur électronique (18), qui sont agencés sur la plateforme (9) et sont configurés pour fournir lesdits signaux de commande sur la base de l'état de butée réciproque de la plateforme (9) et de l'unité à accumulateur électrique (2).

5. Système selon la revendication 4, dans lequel lesdits dispositifs à détecteur électronique (18) comprennent des moyens à transducteur de force.

6. Système selon les revendications 4 ou 5, dans lequel lesdits dispositifs à détecteur électronique (18) sont chacun munis d'un élément de couplage (18e), qui peut être exploité par l'opérateur pour le couplage ou le découplage dudit dispositif à détecteur électronique (18) sur ladite plateforme (9).

7. Système selon l'une quelconque des revendications 4 à 6 précédentes, comprenant un système de centrage électronique (20), qui est configuré pour générer des signaux lumineux pour l'agencement desdits dispositifs à détecteur électronique (18) et/ou de ladite plateforme (9) par rapport à ladite unité à accumulateur électrique (2).

8. Système selon l'une quelconque des revendications 4 à 7 précédentes, dans lequel lesdits dispositifs à détecteur électronique (18) sont munis d'une base d'appui conçue pour être en appui sur ladite plateforme (9), d'une tête de support (18d) qui est agencée à l'opposé de ladite base d'appui, et d'un mécanisme de réglage pour faire varier la position axiale de ladite tête de support (18d) par rapport à la base.

9. Système selon l'une quelconque des revendications 4 à 8 précédentes, dans lequel chaque dispositif à détecteur électronique (18) est structuré pour être librement déplacé et positionné manuellement sur la surface de dessus de la plateforme (9).

10. Système selon l'une quelconque des revendications 4 à 9 précédentes, dans lequel, dans une position de travail de la plateforme (9), les dispositifs à détecteur électronique (18) sont interposés entre la plateforme (9) et l'unité à accumulateur électrique (2) d'une manière telle qu'ils sont en contact avec l'unité à accumulateur électrique (2).

11. Système selon l'une quelconque des revendications 4 à 10 précédentes, dans lequel des modules électroniques de capture de force (18a) sont agencés dans les dispositifs à détecteur électronique (18) d'une manière telle qu'ils sont comprimés entre l'unité à accumulateur électrique (2) montée dans le véhicule (3) et la plateforme (9) dans sa section terminale du levage, lorsque la plateforme (9) atteint approximativement une position de travail.

12. Système selon la revendication 11, dans lequel les modules électroniques de capture de force (18a) comprennent des cellules de pesage électroniques ou un transducteur pour la détermination d'une force à laquelle les dispositifs à détecteur électronique (18) sont soumis afin de fournir des signaux de commande indicatifs de la force mesurée.

13. Système selon la revendication 7, dans lequel le système de centrage électronique (20) est configuré pour émettre des signaux lumineux depuis la plateforme (9) vers la surface de dessous de l'unité à accumulateur électrique (2) montée dans le véhicule électrique (3).

14. Système selon la revendication 13, dans lequel les signaux lumineux incluent des faisceaux laser ou des signaux lumineux collimatés.

15. Procédé pour le démontage/montage d'une unité à accumulateur électrique (2) depuis/dans un véhicule électrique (3), le procédé comprenant les étapes suivantes :
le déplacement de manière verticale, au moyen d'un pont-élévateur (7), du véhicule électrique (3) vers et depuis une surface de service (S) afin de placer le véhicule électrique (3) dans une position levée par rapport à la surface de service (S),
la fourniture d'un chariot (8) comprenant une plateforme (9) qui est structurée pour porter l'unité à accumulateur électrique (2), l'agencement du chariot (8) sous le véhicule électrique (3) lorsque ledit véhicule électrique (3) est dans ladite position levée,
la détection, par le biais d'un système à détecteurs électroniques (10), d'une première condition indicative d'un positionnement prédéterminé de la plateforme (9) du chariot (8) par rapport à l'unité à accumulateur électrique (2) et/ou au véhicule électrique (3) et la fourniture de signaux de commande sur la base de ladite première condition,
**caractérisé en ce que**
dans lequel, pendant le démontage, ladite première condition est satisfaite lorsque la plateforme (9) du chariot (8) et l'unité à accumulateur électrique (2) montée dans le véhicule électrique (3) sont dans un état de butée réciproque.
